# EUROPEAN PATENT SPECIFICATION

(11) **EP 2 278 393 B1**
(45) Date of publication and mention of the grant of the patent: **09.05.2012**
(21) Application number: 10169693.8
(22) Date of filing: 15.07.2010
(51) Int. Cl.: G03B 21/00, H04N 5/74

(54) **Image projection apparatus**
Bildprojektor
Appareil de projection d'images

(30) Priority: 21.07.2009 JP 2009170644
(43) Date of publication of application: 26.01.2011
(73) Proprietor: Canon Kabushiki Kaisha, Tokyo 146-8501 (JP)
(72) Inventor: Ishida, Yusuke, Tokyo Tokyo 146-8501 (JP)
(74) Representative: TBK

(56) References cited:
- US-A- 5 895 110
- US-A1- 2005 024 596
- US-A1- 2005 168 706
- US-A1- 2009 015 730

## Description

The present invention relates to an image projection apparatus such as a liquid crystal projector, in particular to an image projection apparatus having a function of optically and electrically shifting a position of a projected image.

The above-mentioned image projection apparatus illuminates an image-forming element with light from a light source and projects light modulated by an original image formed on the image-forming element onto a projection surface such as a screen through a projection optical system to display an image (projected image).

Such an image projection apparatus has, as functions of adjusting a position of the projected image, an optical shifting function that shifts the projection optical system with respect to the image-forming element and a digital shifting function that shifts an image-forming area where the original image is formed on the image-forming element.

The optical shifting function shifts the projection optical system in a direction orthogonal to an optical axis thereof. The shift of the projection optical system is, as disclosed in Japanese Patent Laid-Open No. 2005-49476, normally performed by driving an actuator such as a motor according to a user's operation of an operating switch.

In the digital shifting function, as disclosed in Japanese Patent Laid-Open Nos. 2005-215542 and 2006-246306, the image-forming area where the original image is actually formed is set smaller than a maximum image formable range on the image-forming element, and thereby a non-image-forming area is formed around the image-forming area. The digital shifting function shifts the image-forming area in horizontal and vertical directions by an amount corresponding to a height or a width of the non-image-forming area.

However, conventional image projection apparatuses employing the optical shifting function and the digital shifting function are provided with operating switches separately for these shifting functions and require operation procedures of these operating switches different from each other, which makes user's operations of the apparatus complex. Further, when the position of the projected image is widely shifted by using both the optical shifting function and the digital shifting function, a user should determine switching of these shifting functions, that is, it is necessary for the user to properly use these shifting functions.
Further prior art which refers to this field can be found in documents US 5895110, disclosing "LCD video projector" US 2005/024596, US 2005/168706, both disclosing "Projector" and US 2009/015730, disclosing "Image projecting method and projector".

The present invention provides an image projection apparatus capable of shifting a projected image in a wide range by using an optical shifting function and a digital shifting function in response to a user's simple operation.

The present invention in its first aspect provides an image projection apparatus as specified in claim 1.

The present invention in its second aspect provides an image projection apparatus as specified in claim 2.

The present invention in its third aspect provides an image projection apparatus as specified in claim 3.

The present invention in its fourth aspect provides an image projection apparatus as specified in claim 4.

Other aspects of the present invention will become apparent from the following description and the attached drawings.

FIG. 1 shows a configuration of a liquid crystal projector that is Embodiment 1 of the present invention.

FIGS. 2A to 2E show various relationships between an image-forming area (original image) and a non-image-forming area on a liquid crystal panel in Embodiment 1.

FIG. 3 is a flowchart showing processing performed in Embodiment 1.

FIG. 4 shows shifting of a projected image in Embodiment 1.

FIG. 5 is a flowchart showing processing performed in a liquid crystal projector that is Embodiment 2 of the present invention.

FIG. 6 shows shifting of a projected image in Embodiment 2.

FIGS. 7A and 7B show configurations of operating parts provided with liquid crystal projectors that are Embodiments 3 and 4 of the present invention.

FIG. 8 is a flowchart showing processing performed in the liquid crystal projector of Embodiment 3.

Exemplary embodiments of the present invention will be described hereinafter with reference to the accompanying drawings.

### First Embodiment

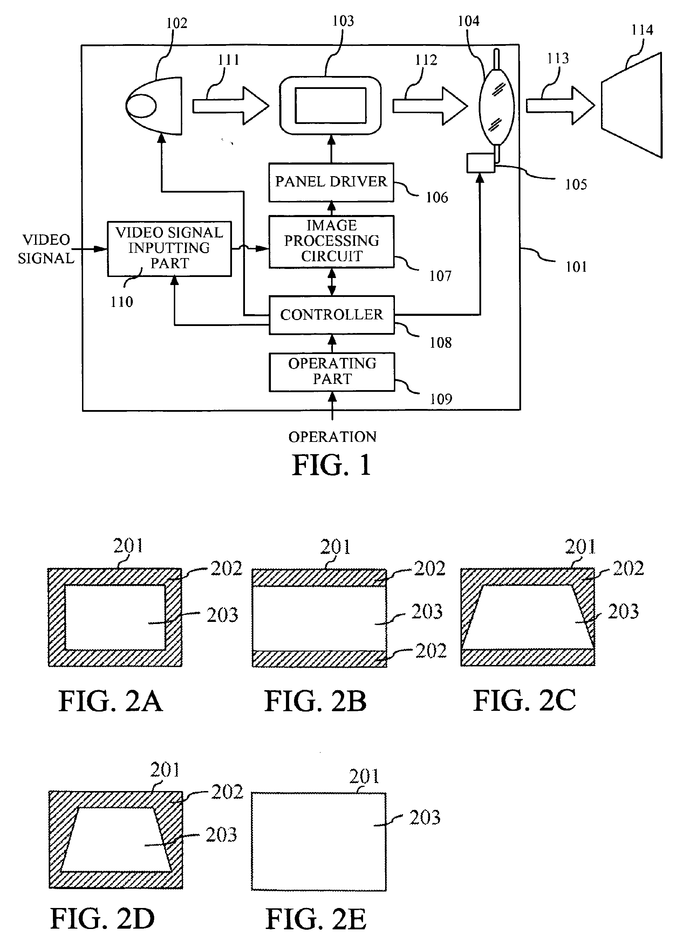

FIG. 1 shows a configuration of a liquid crystal projector (image projection apparatus) 101 that is a first embodiment (Embodiment 1) of the present invention.

A lamp 102 which is a light source emits light 111 to illuminate a liquid crystal panel 103 that is an image-forming element with the light 111. The liquid crystal panel 103 forms an original image corresponding to a video signal input to the projector 101, and modulates the light 111 from the lamp 102 according to the original image. The modulated light 112 forms an image to be projected. The image to be projected (light 113 to be projected) is projected onto a projection surface 114 such as a screen through a projection lens (projection optical system) 104. Thus, a projected image which is an enlarged image of the original image is displayed on the projection surface 114.

A lens shift driver (optical shifting part) 105 shifts the projection lens 104 in directions orthogonal to an optical axis of the projection lens 104, in other words, in a vertical (upper and lower) direction and in a horizontal (right and left) direction. The lens shift driver 105 is constituted by an actuator such as a motor, a shifting mechanism that shifts the projection lens 104 by receiving a driving force from the actuator, and an encoder that detects a shift amount (that is, a shift position) of the projection lens 104.

The encoder outputs a digital value corresponding to the shift amount of the projection lens 104. The encoder may be constituted by a pulse encoder that outputs as a digital value a counted value of the number of pulses showing the shift amount of the projection lens 104 from a reference position thereof, or may be constituted by a potentiometer that outputs an analog value corresponding to the shift amount of the projection lens 104 and an A/D converter that converts the analog value output from the potentiometer to output a digital value. In place of the encoder, an end detection switch may be used which detects that the projection lens 104 is located at an end of a shiftable range thereof.

A video signal inputting part 110 transfers the video signal input thereinto from an outside to an image processing circuit 107.

The image processing circuit 107 performs video format distinction processing, scaling processing and color correction processing on the video signal. The video format distinction processing distinguishes a video format including an image size (such as an aspect ratio or resolution) and color information. The scaling processing enlarges and reduces an image area extracted from the video signal. The color correction processing performs digital processing to correct colors of the video signal. Thus, the image processing circuit 107 produces an image signal from the input video signal.

A panel driver 106 drives the liquid crystal panel 103 on the basis of the image signal produced by the image processing circuit 107 to cause the liquid crystal panel 103 to form the original image as a modulating pattern.

Moreover, the image processing circuit 107 as an image shifting part stores the produced image signal (frame images) in a frame memory (not shown) provided in the image processing circuit 107. Each frame image stored in the frame memory one-to-one corresponds to each original image formed on the liquid crystal panel 103. Therefore, shifting a position of the frame image in the frame memory shifts a position of the original image on the liquid crystal panel 103.

The image processing circuit 107 produces a frame image having a lower resolution than that of the liquid crystal panel 103. This frame image is produced by using the scaling processing performed by the image processing circuit 107.

The image processing circuit 107 places the produced frame image at a center of the frame memory in an initial state to form, as shown in FIG. 2A, an original image (image-forming area) 203 corresponding to the frame image at a center of a maximum image formable range (hereafter referred to as "panel effective range") 201 on the liquid crystal panel 103. The panel effective range 201 is a range where the original image can be formed. Further, a non-image-forming area 202 where the original image is not formed is formed around the original image 203 (that is, in upper, lower, right and left areas outside the original image 203).

Moreover, the image processing circuit 107 performs, according to a vertical resolution or a horizontal resolution of the input video signal, enlargement processing or reduction processing on the input video signal to produce a frame image whose vertical or horizontal resolution is the same as that of the liquid crystal panel 103. The resolution of the input video signal can be detected by the video format distinction processing of the image processing circuit 107. The image processing circuit 107 places the produced frame image at the center of the frame memory in the initial state to form, as shown in FIG. 2B, an original image 203 at a vertical center of the panel effective range 201. In FIG. 2B, the non-image-forming areas 202 are formed in upper and lower areas outside the original image 203.

Furthermore, the image processing circuit 107 also can distort the original image into a trapezoidal shape to form a distorted original image 203 at the center of the panel effective range 201 as shown in FIGS. 2C and 2D in order to perform so-called keystone correction. In FIGS. 2C and 2D, the non-image-forming area 202 is formed around the distorted original image 203.

In addition, the image processing circuit 107 also can form a frame image whose resolution is the same as that of the liquid crystal panel 103 to form an original image 203 corresponding to the frame image in the entire panel effective range as shown in FIG. 2E. In FIG. 2E, the non-image forming region is not formed.

A controller 108 is constituted by a microcomputer. In response to operations of various switches (not shown) provided in an operating part 109, the controller 108 controls various operations of the projector 101 including turning on/off of a power supply of the projector 101 and turning on/off of the lamp 102, and performs lens shift control (optical shift control) and digital shift control (image shift control) which will be described later.

The operating part 109 includes a power switch to be operated by a user to turn the power supply on/off, a shift switch to be operated by the user to shift the projected image on the projection surface 114, and the like. The operating part 109 may include a remote-controlling function with wireless communication such as infrared data communication to accept operations of these switches by the user from a separated place.

Next, description will be made of the lens shift control. The projection lens 104 is shifted with respect to the optical axis of the projection lens 104 (in other words, with respect to the liquid crystal panel 103) in a two-dimensional range as a first shift range (hereinafter referred to as "lens shiftable range") including upper, lower, right and left directions. The projection lens 104 is shifted by the actuator of the lens shift driver 105 being controlled by the controller 108. The shift of the projection lens 104 is hereinafter referred to as "lens shift".

When starting the lens shift control, the controller 108 first decides a direction in which the lens shift is performed (hereinafter referred to as "lens shift direction") in response to the operation of the operating part (shift switch) 109. The controller 108 then determines whether or not the projection lens 104 is located at an end of the lens shiftable range (hereinafter referred to as "lens shift end") in the lens shift direction. This determination is made by comparing position information of the lens shift end stored in the memory in advance with actual position information of the projection lens 104 obtained from the output of the encoder provided in the lens shift driver 105. The determination may be made by using the above-described end detection switch provided in the lens shift driver 105.

The controller 108 does not perform the lens shift when having determined that the projection lens 104 is located at the lens shift end since it is impossible to further shift the projection lens 104 in the lens shift direction. The controller 108 decides a speed and a target position of the lens shift when having determined that the projection lens 104 is not located at the lens shift end. Then, the controller 108 decides a driving direction of the actuator corresponds to the lens shift direction, and further decides a driving speed of the actuator on the basis of the speed and target position of the lens shift. The controller 108 controls the actuator on the basis of these decisions, and thereby the lens shift is performed and the projected image is also shifted on the projection surface 114.

The controller 108 monitors the position of the projection lens 104 during the lens shift. Then, when the projection lens 104 reaches the target position or the lens shift end, the controller 108 stops the lens shift.

Next, description will be made of the digital shift control. On the liquid crystal panel 103, the original image, that is, the image-forming area is shifted in the panel effective range as a second shift range in two-dimensional range including upper, lower, right and left directions by the image processor 107 being controlled by the controller 108. The shift of the original image is hereinafter referred to as "digital shift".

When starting the digital shift (that is, in an initial state), the controller 108 determines whether or not the non-image-forming area for allowing the digital shift is present outside the original image on the liquid crystal panel 103 in at least one of the vertical and horizontal directions. This determination is performed on the basis of the video format of the input video signal or a scale value in the scaling processing.

FIG. 2A shows an example in which the original image 203 whose aspect ratio (ratio of a horizontal length and a vertical length) is 4:3 and whose size is smaller than that of the panel effective range 201 whose aspect ratio is 4:3 is formed at the center of the panel effective range 201. FIG. 2B shows an example in which the original image 203 whose aspect ratio is 16:9 is formed at the vertical center of the same panel effective range 201. In FIGS. 2A and 2B, the non-image forming area 202 is formed around the original image (image-forming area) 203 or in each of the upper and lower outside areas thereof.

If the non-image-forming area is not present, it is impossible to perform the digital shift, and therefore the controller 108 does not perform the digital shift. If the non-image-forming area is present, the controller 108 decides a direction in which the digital shift is performed (hereinafter referred to as "digital shift direction") in response to the operation of the operating part (shift switch) 109. Then, the controller 108 determines whether or not the non-image-forming area is present in the digital shift direction. If the non-image-forming area is not present in the digital shift direction, the controller 108 does not perform the digital shift.

On the other hand, if the non-image-forming area is present in the digital shift direction, the controller 108 decides a digital shift amount, and calculates a position of the original image after the digital shift. The position of the original image after the digital shift is hereinafter referred to as "digital shift position". The digital shift amount is decided such that at least part of the original image does not shift outside the panel effective range. Further, the controller 108 sets the digital shift position to the image processing circuit 107. The image processing circuit 107 places the produced frame image at the digital shift position in the frame memory. Thereby, the original image is formed at a position shifted by the digital shift amount from a position in the initial state on the liquid crystal panel 103, and the projected image on the projection surface 114 is also shifted by an amount corresponding to the digital shift amount.

Next, description will be made of methods of performing the lens shift control and the digital shift control. The lens shift control and the digital shift control are performed by the following performing methods.

In a first performing method, the digital shift control is performed when detection is made that the projection lens 104 is located at the lens shift end.

In a second performing method, the lens shift control is performed when detection is made that the original image is located at an end of the panel effective range.

In a third performing method, the position (digital shift position) of the original image is acquired, and then at least one of the lens shift control the digital shift control is performed according to the acquired digital shift position.

In a fourth performing method, the position (lens shift position) of the projection lens 104 is acquired, and then at least one of the lens shift control the digital shift control is performed according to the acquired lens shift position.

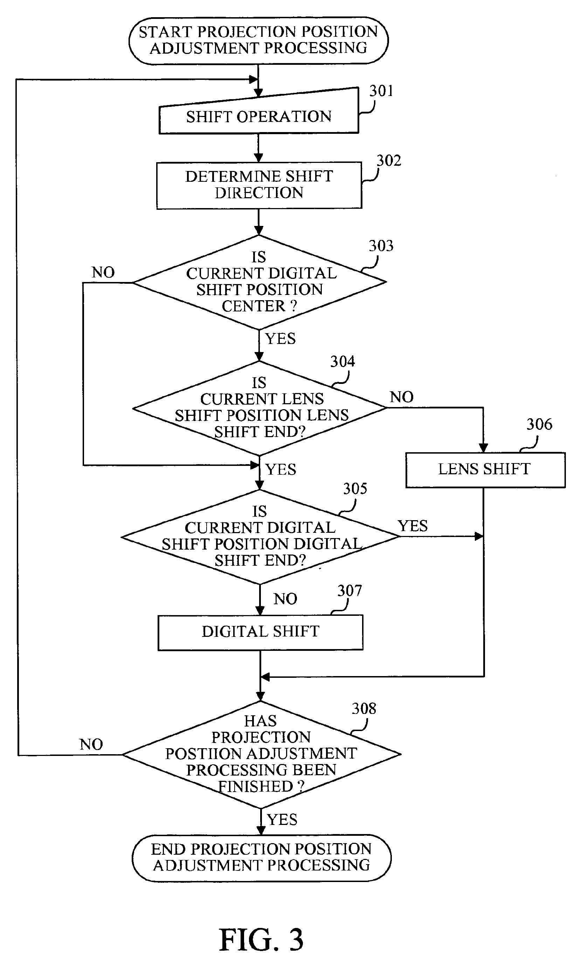

This embodiment employs a combination of the first and third performing methods among the first to fourth performing methods, and automatically performs switching between the lens shift control and the digital shift control. FIG. 3 shows a flowchart of projection position adjustment processing for performing the lens shift control and the digital shift control in this embodiment. Hereinafter, description will be made of a case where a projection position adjustment switch provided in the operating part 109 is operated by a user, and thereby the controller 108 enters a projection position adjustment mode.

First, at step 301, the controller 108 enters a state of waiting for an operation (hereinafter referred to as "shift operation") of the shift switch provided in the operating part 109. In this embodiment, the shift switch is a switch which is operated by the user to shift the projected image on the projection surface 114, and is provided commonly for both the lens shift control and the digital shift control. When the shift operation has been made at step 301, the controller 108 at step 302 determines a shift direction of the projected image instructed by the shift operation.

At step 303, the controller 108 determines whether or not a current digital shift position is a center of the panel effective range in a direction corresponding to the shift direction determined at step 302 among the vertical and horizontal directions. This step 303 is a step for performing a determination relating to the third performing method. If the current digital shift position is the center of the panel effective range, the controller 108 proceeds to step 304. If the current digital shift position is not the center of the panel effective range, the controller 108 proceeds to step 305.

In this embodiment, as described above, a state where the original image is formed at the center of the panel effective range is defined as the initial state in the digital shift control. Further, a state where the projection lens 104 is located at a center of the lens shiftable range is defined as an initial state in the lens shift control. However, it is not necessarily needed that the original image and the projection lens 104 be located at the centers of the panel effective range and the lens shiftable range in the initial state, respectively. In other words, the original image and the projection lens 104 may be located at positions closer to the centers of the panel effective range and lens shiftable range in the initial state, respectively. The "center" includes not only a strict center, but also a position near the strict center which can be regarded as the center.

Then, at step 304, the controller 108 determines whether the lens shift can or cannot be performed. In other words, the controller 108 determines whether the projection lens 104 is not located or is located at the lens shift end in the lens shift direction corresponding to the shift direction of the projected image determined at step 302. This step 304 is a step for performing a determination relating to the first performing method. If the projection lens 104 is not located at the lens shift end, the controller 108 proceeds to step 306 to perform the lens shift control in the lens shift direction. If the projection lens 104 is located at the lens shift end, the controller 108 proceeds to step 305 because the lens shift cannot be performed.

At step 305, the controller 108 determines whether the digital shift can or cannot be performed. In other words, the controller 108 determines whether the original image (image-forming area) is not located or is located at the end of the panel effective range (hereinafter referred to as "digital shift end") in the digital shift direction corresponding to the shift direction of the projected image determined at step 302. If the original image is not located at the digital shift end, the controller 108 proceeds to step 307 to perform the digital shift control in the digital shift direction. If the original image is located at the digital shift end, the controller 108 proceeds to step 308 because the digital shift also cannot be performed.

At step 308, the controller 108 determines whether or not the projection position adjustment processing should be ended. Specifically, the controller 108 determines whether or not a ending operation such as a re-operation of the projection position adjusting switch or an operation of a projection position adjustment ending switch is performed. The controller 108 may determine that the projection position adjustment processing should be ended when the shift operation has not been performed for a predetermined time. If the projection position adjustment processing should not be ended, the controller 108 returns to step 301 to wait for the shift operation again. If the projection position adjustment processing should be ended, the controller 108 ends this processing.

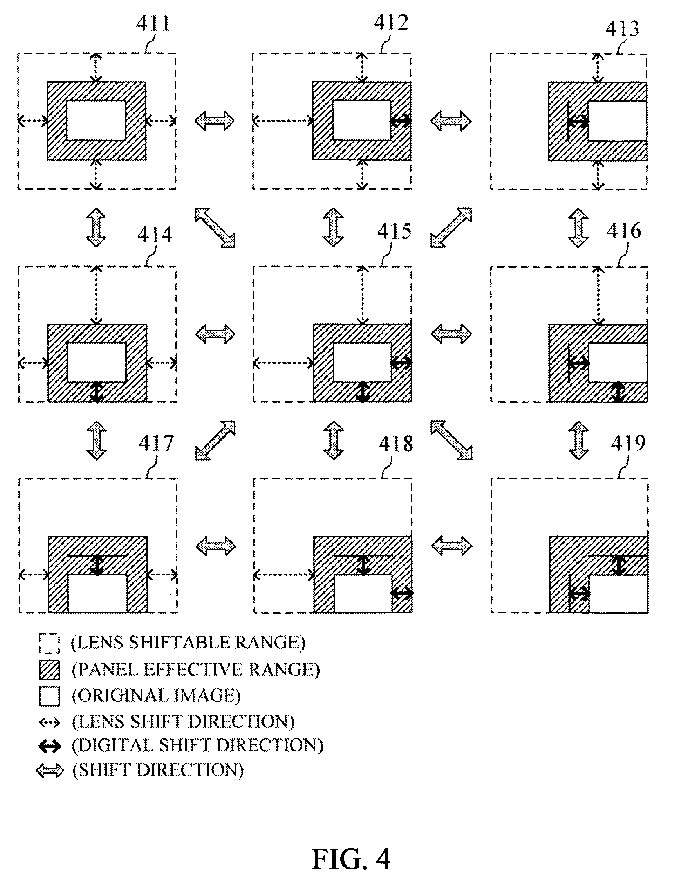

FIG. 4 shows the shift of the projected image in this embodiment. In FIG. 4, reference numeral 411 denotes the initial state where the lens shift and the digital shift have not been yet performed. Reference numerals 412 to 419 denote states where the projected image is shifted from the initial state 411 by at least one of the lens shift and the digital shift.

A dotted frame shows a shiftable range of the projected image by the lens shift, which corresponds to the lens shiftable range. A hatched area shows the non-image-forming area on the liquid crystal panel 103. A white area in the hatched area shows the projected image, which corresponds to the image-forming area where the original image is formed on the liquid crystal panel 103. A dotted arrow shows a direction where the lens shift can be performed, and a solid arrow shows a direction where the digital shift can be performed. In addition, a heavy arrow shows the shift direction where the projected image is shifted.

In the initial state 411 where the projected image is located at the center of the shiftable range thereof, the original image is located at the center of the panel effective range, and the projection lens 104 is also located at the center of the lens shiftable range.

When the projected image is shifted rightward from the state 411, the lens shift is first performed to a right lens shift end to obtain the state 412. Then, the lens shift is stopped and the digital shift is automatically started. When the position of the original image reaches a right digital shift end to obtain the state 413, the digital shift (that is, the shift of the projected image) is stopped.

In the state 413, the original image is located at the vertical center of the panel effective range. From this state, the lens shift in the vertical direction can be performed. On the other hand, since the original image is not located at a horizontal center of the panel effective range (that is, the original image is located at the right digital shift end), the digital shift leftward can be performed.

When the projected image is shifted downward from the state 413, the lens shift is first performed to a lower lens shift end to obtain the state 416. Then, the lens shift is stopped and the digital shift is automatically started. When the position of the original image reaches a lower digital shift end to obtain the state 419, the digital shift is stopped.

In the state 419, the original image is vertically and horizontally located at the digital shift end in the panel effective range. From this state, the digital shift upward and leftward can be performed.

When the projected image is shifted leftward from the state 419, the digital shift is first performed to the horizontal center of the panel effective range to obtain the state 418. Then, the digital shift is stopped and the lens shift is automatically started. In the state 418, since the original image is not located at the vertical center of the panel effective range (that is, the original image is located at the lower digital shift end), the digital shift upward can be performed. On the other hand, since the original image is located at the horizontal center of the panel effective range and the projection lens 104 is located at the right lens shift end, the lens shift leftward and the digital shift rightward can be performed.

When the projected image is shifted upward from the state 418, the digital shift is first performed to the center of the panel effective range to obtain the state 415. Then, the digital shift is stopped and the lens shift is automatically started.

In the state 415, since the original image is located at the vertical center of the panel effective range and the projection lens 104 is located at the lower lens shift end, the lens shift upward and the digital shift downward can be performed. On the other hand, since the original image is located at the horizontal center of the panel effective range and the projection lens 104 is located at the right lens shift end, the lens shift leftward and the digital shift rightward can be performed.

The shift of the projected image other than those described above is performed in a similar manner.

As described above, in this embodiment, when the shift operation is performed, the lens shift is preferentially performed to shift the projected image. Then, the projected image is shifted by the digital shift, which is automatically changed from the lens shift, to a position that cannot be reached by the lens shift. This enables the shift of the projected image in a wide range in response to a user's simple operation.

Moreover, this embodiment that preferentially performs the lens shift maintains the original image at the center of the panel effective range as far as possible. Intensity of the light projected onto the liquid crystal panel 103 from the lamp 102 is not uniform on the liquid crystal panel 103, but is highest at the vicinity of the center of the liquid crystal panel 103. Therefore, maintaining the original image at the center of the panel effective range as far as possible makes it possible to obtain a bright projected image in a range where the projected image can be shifted by the lens shift.

### Second Embodiment

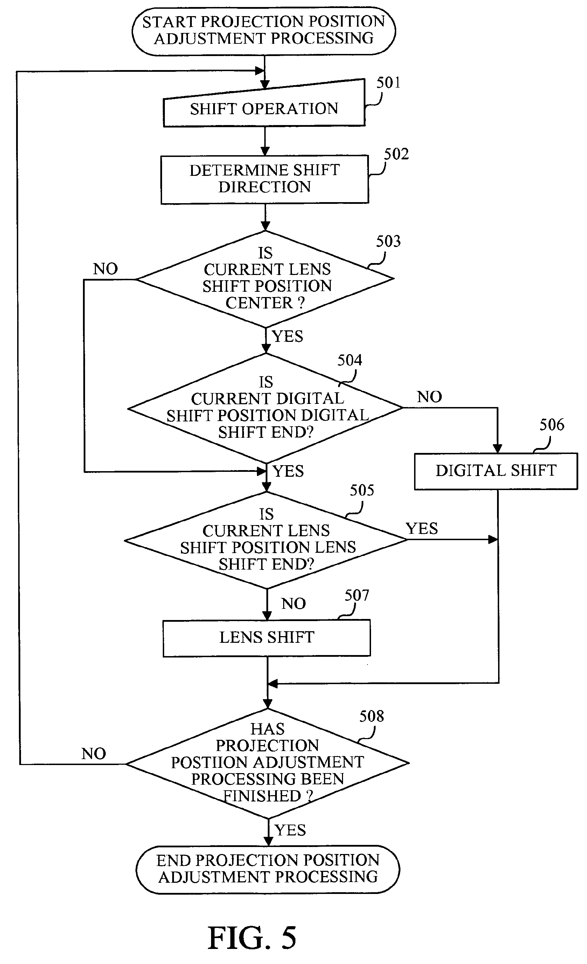

Next, description will be made of a liquid crystal projector (image projection apparatus) that is a second embodiment (Embodiment 2) of the present invention. Embodiment 2 employs a combination of the second and fourth performing methods described in Embodiment 1, and automatically performs switching between the digital shift control (digital shift) and the lens shift control (lens shift). FIG. 5 shows a flowchart of projection position adjustment processing for performing the digital shift control and the lens shift control in this embodiment.

Hereinafter, description will be made of a case where a projection position adjustment switch provided in an operating part 109 is operated by a user, and thereby a controller 108 enters a projection position adjustment mode. A configuration of the image projection apparatus of this embodiment is the same as that of the image projection apparatus of Embodiment 1. Components common to those in Embodiment 1 are denoted by the same reference numerals as those in Embodiment 1 and detailed descriptions thereof are omitted.

First, at step 501, the controller 108 enters a state of waiting for an operation (shift operation) of a shift switch provided in the operating part 109. Also in this embodiment, the shift switch is a switch which is operated by a user to shift a projected image on a projection surface 114, and is provided commonly for both the digital shift control and the lens shift control. When the shift operation has been made at step 501, the controller 108 at step 502 determines a shift direction of the projected image instructed by the shift operation.

At step 503, the controller 108 determines whether or not a current lens shift position is a center of a lens shiftable range in a direction corresponding to the shift direction determined at step 502 among vertical and horizontal directions. This step 503 is a step for performing a determination relating to the fourth performing method. If the current lens shift position is the center of the lens shiftable range, the controller 108 proceeds to step 504. If the current lens shift position is not the center of the lens shiftable range, the controller 108 proceeds to step 505.

At step 504, the controller 108 determines whether the digital shift can or cannot be performed. In other words, the controller 108 determines whether an original image (image-forming area) is not located or is located at a digital shift end which is an end of the panel effective range in a digital shift direction corresponding to the shift direction of the projected image determined at step 502. This step 504 is a step for performing a determination relating to the second performing method. If the original image is not located at the digital shift end, the controller 108 proceeds to step 506 to perform the digital shift control in the digital shift direction. If the original image is located at the digital shift end, the controller 108 proceeds to step 505 because the digital shift cannot be performed.

At step 505, the controller 108 determines whether the lens shift can or cannot be performed. In other words, the controller 108 determines whether a projection lens 104 is not located or is located at a lens shift end which is an end of the lens shiftable range in a lens shift direction corresponding to the shift direction of the projected image determined at step 502. If the projection lens 104 is not located at the lens shift end, the controller 108 proceeds to step 507 to perform the lens shift control in the lens shift direction. If the projection lens 104 is located at the lens shift end, the controller 108 proceeds to step 508 because the lens shift also cannot be performed.

At step 508, the controller 108 determines whether or not the projection position adjustment processing should be ended as at step 308 in Embodiment 1. If the projection position adjustment processing should not be ended, the controller 108 returns to step 501 to wait for the shift operation again. If the projection position adjustment processing should be ended, the controller 108 ends this processing.

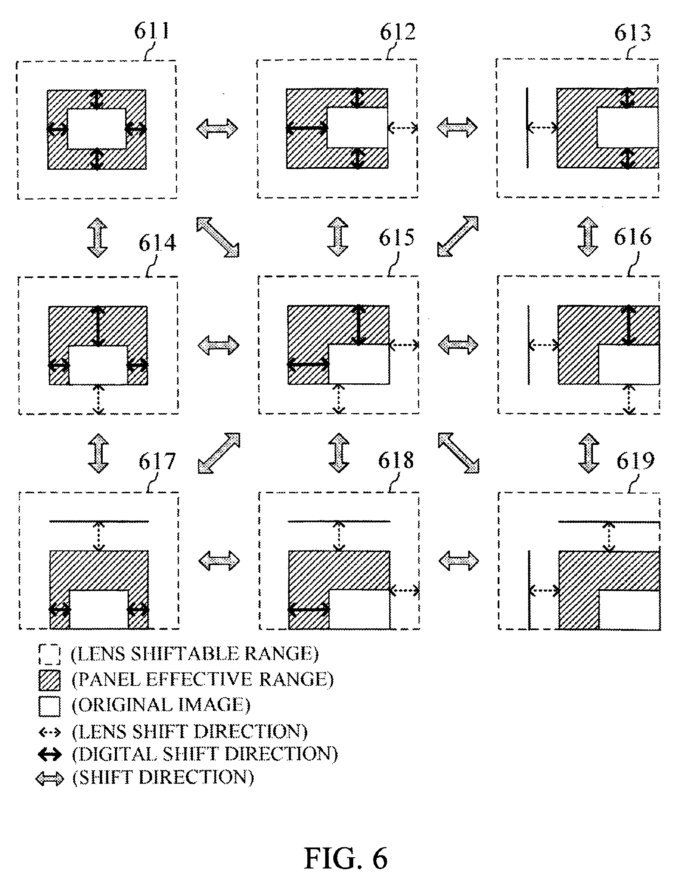

FIG. 6 shows the shift of the projected image in this embodiment. In FIG. 6, reference numeral 611 denotes an initial state where the lens shift and the digital shift have not been yet performed. Reference numerals 612 to 619 denote states where the projected image is shifted from the initial state 611 by at least one of the digital shift and the lens shift.

As in Embodiment 1 (FIG. 4), a dotted frame shows a shiftable range of the projected image by the lens shift, which corresponds to the lens shiftable range. A hatched area shows a non-image-forming area on a liquid crystal panel 103. A white area in the hatched area shows the projected image, which corresponds to the image-forming area where the original image is formed on the liquid crystal panel 103. A dotted arrow shows a direction where the lens shift can be performed, and a solid arrow shows a direction where the digital shift can be performed. In addition, a heavy arrow shows the shift direction where the projected image is shifted.

In the initial state 611 where the projected image is located at the center of the shiftable range thereof, the original image is located at the center of the panel effective range on the liquid crystal panel 103, and the projection lens 104 is also located at the center of the lens shiftable range.

When the projected image is shifted rightward from the state 611, the digital shift is first performed to a right digital shift end to obtain the state 612. Then, the digital shift is stopped and the lens shift is automatically started. When a position of the projection lens 104 reaches a right lens shift end to obtain the state 613, the lens shift (that is, the shift of the projected image) is stopped.

In the state 613, the projection lens 104 is located at a vertical center of the lens shiftable range. From this state, the digital shift upward and downward can be performed. On the other hand, since the projection lens 104 is not located at a horizontal center of the lens shiftable range (that is, the projection lens 104 is located at the right lens shift end), the lens shift leftward can be performed.

When the projected image is shifted downward from the state 613, the digital shift is first performed to a lower digital shift end to obtain the state 616. Then, the digital shift is stopped and the lens shift is automatically started. When the position of the projection lens 104 reaches a lower lens shift end to obtain the state 619, the lens shift is stopped.

In the state 619, the projection lens 104 is vertically and horizontally located at the lens shift end (lower and right lens shift ends) in the lens shiftable range. From this state, the lens shift upward and leftward can be performed.

When the projected image is shifted leftward from the state 619, the lens shift is first performed to the horizontal center of the lens shiftable range to obtain the state 618. Then, the lens shift is stopped and the digital shift is automatically started.

In the state 618, since the projection lens 104 is not located at the vertical center of the lens shiftable range (that is, the projection lens 104 is located at the lower lens shift end), the lens shift upward can be performed. On the other hand, since the projection lens 104 is located at the horizontal center of the lens shiftable range and the original image is located at the right digital shift end, the digital shift leftward and the lens shift rightward can be performed.

When the projected image is shifted upward from the state 618, the lens shift is first performed to the center of the lens shiftable range to obtain the state 615. Then, the lens shift is stopped and the digital shift is automatically started.

In the state 615, since the projection lens 104 is located at the vertical center of the lens shiftable range and the original image is located at the lower digital shift end, the digital shift upward and the lens shift downward can be performed. On the other hand, since the projection lens 104 is located at the horizontal center of the lens shiftable range and the original image is located at the right digital shift end, the digital shift leftward and the lens shift rightward can be performed.

The shift of the projected image other than those described above is performed in a similar manner.

As described above, in this embodiment, when the shift operation is performed, the digital shift is preferentially performed to shift the projected image. Then, the projected image is shifted by the lens shift, which is automatically changed from the digital shift, to a position that cannot be reached by the digital shift. This enables the shift of the projected image in a wide range in response to a user's simple operation.

Moreover, this embodiment that preferentially performs the digital shift maintains the projection lens 104 at the center of the lens shiftable range as far as possible. At the center of the lens shiftable range, an optical axis of the projection lens 104 approximately coincides with a center of the projected image. The projection lens 104 has aberration whose influence on the projected image increases as a distance from the optical axis increases. For example, the aberration distorts the projected image or deteriorates accuracy of color reproducibility of the projected image. Therefore, maintaining the projection lens 104 at the center of the lens shiftable range as far as possible makes it possible to obtain a projected image with less distortion and accurate color reproducibility in a range where the projected image can be shifted by the digital shift.

### Third Embodiment

Next, description will be made of a liquid crystal projector (image projection apparatus) that is a third embodiment (Embodiment 3) of the present invention. The methods of performing the lens shift control (lens shift) and the digital shift control (digital shift) include not only the above-described first to fourth performing methods, but also a fifth performing method described below.

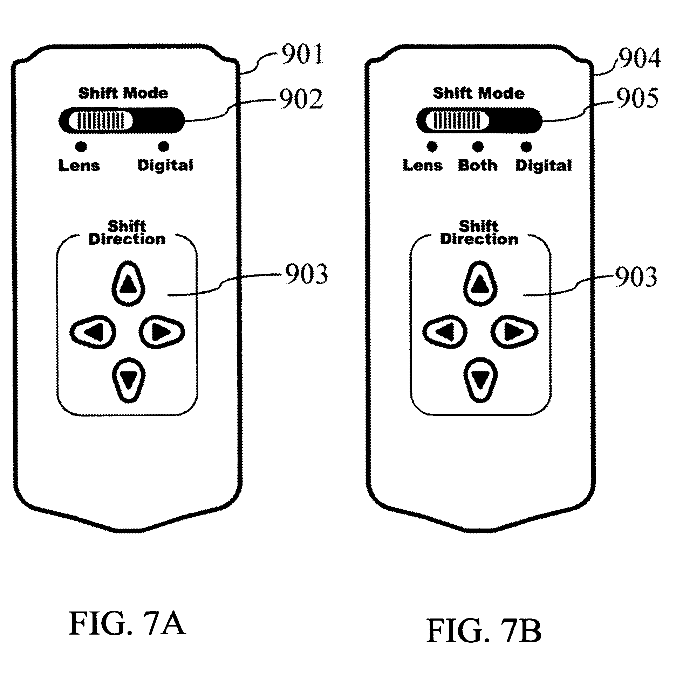

The fifth performing method is applied to a case where an operating part 901 includes, as shown in FIG. 7A, a shift direction selecting part 903 which is operated by a user to select a shift direction of a projected image and a shifting method selecting part 902 which is operated by the user to select one of the digital shift and the lens shift as a shifting method to be preferentially used.

In the fifth performing method, when the shift direction selecting part 903 is operated in a state where the preferential use of the digital shift is selected through the shifting method selecting part 902, the digital shift control is preferentially performed, and after an original image is shifted to the digital shift end described in Embodiments 1 and 2, the lens shift control is performed. On the other hand, when the shift direction selecting part 903 is operated in a state where the preferential use of the lens shift is selected through the shifting method selecting part 902, the lens shift control is preferentially performed, and after a projection lens 104 is shifted to a lens shift end described in Embodiments 1 and 2, the digital shift control is performed.

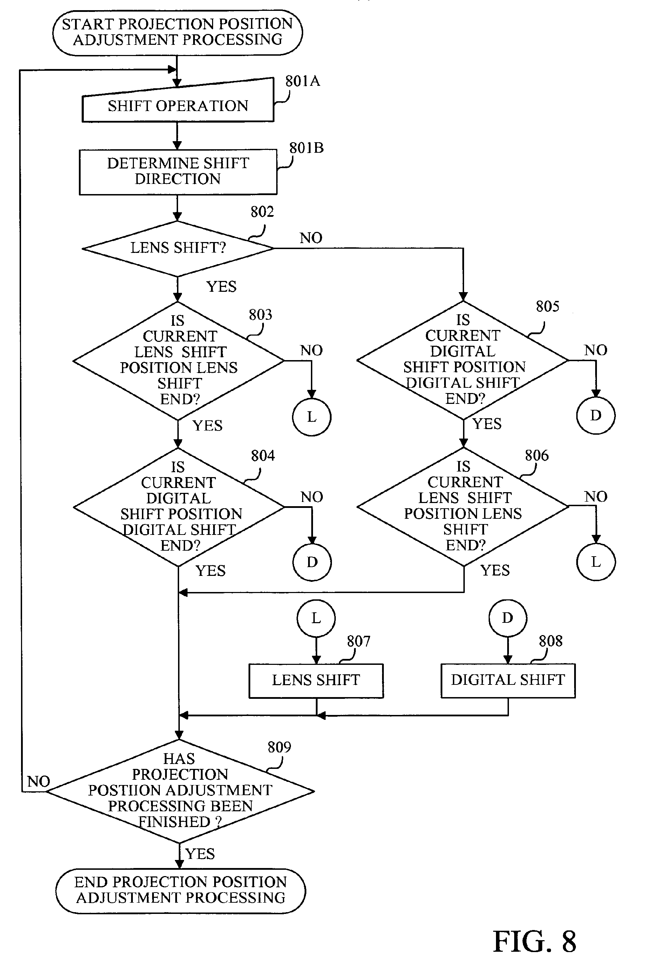

FIG. 8 shows a flowchart of projection position adjustment processing in which the digital shift control and the lens shift control are automatically switched by the fifth performing method. Hereinafter, description will be made of a case where a projection position adjustment switch provided in the operating part 901 is operated by the user, and thereby a controller 108 enters a projection position adjustment mode. A configuration of the image projection apparatus of this embodiment other than the operating part 901 is the same as that of the image projection apparatus of Embodiment 1. Components common to those in Embodiment 1 are denoted by the same reference numerals as those in Embodiment 1 and detailed descriptions thereof are omitted.

First, at step 801A, the controller 108 enters a state of waiting for an operation (hereinafter referred to as "shift operation") of the shift direction selecting part 903 provided in the operating part 901. When the shift operation has been made at step 801A, the controller 108 at step 801B determines the shift direction of the projected image instructed by the shift operation.

Next at step 802, the controller 108 determines whether the lens shift or the digital shift has been selected as the shifting method to be used through the shifting method selecting part 902 in the operating part 901. If the lens shift has been selected, the controller 108 proceeds to step 803, and if the digital shift has been selected, the controller 108 proceeds to step 805.

At step 803, the controller 108 determines whether or not a current lens shift position that is a current position of the projection lens 104 is the lens shift end in a lens shift direction corresponding to the shift direction of the projected image determined at step 801B. If the current lens shift position is not the lens shift end, the controller 108 proceeds to step 807 to perform the lens shift control in the lens shift direction. If the current lens shift position is the lens shift end, the controller 108 proceeds to step 804 because the lens shift cannot be performed.

At step 804, the controller 108 determines whether or not a current digital shift position that is a current position of the original image (image-forming area) is the digital shift end in a digital shift direction corresponding to the shift direction of the projected image determined at step 801B. If the current digital shift position is not the digital shift end, the controller 108 proceeds to step 808 to perform the digital shift control in the digital shift direction. If the current digital shift position is the digital shift end, the controller 108 proceeds to step 809 because the digital shift also cannot be performed.

At step 805, the controller 108 determines whether or not the current digital shift position is the digital shift end in the digital shift direction corresponding to the shift direction of the projected image determined at step 801B. If the current digital shift position is not the digital shift end, the controller 108 proceeds to step 808 to perform the digital shift control in the digital shift direction. If the current digital shift position is the digital shift end, the controller 108 proceeds to step 806 because the digital shift cannot be performed.

At step 806, the controller 108 determines whether or not the current lens shift position is the lens shift end in the lens shift direction corresponding to the shift direction of the projected image determined at step 801B. If the current lens shift position is not the lens shift end, the controller 108 proceeds to step 807 to perform the lens shift control in the lens shift direction. If the current lens shift position is the lens shift end, the controller 108 proceeds to step 809 because the lens shift also cannot be performed.

At step 809, the controller 108 determines whether or not the projection position adjustment processing should be ended as at step 308 in Embodiment 1. If the projection position adjustment processing should not be ended, the controller 108 returns to step 801A to wait for the shift operation again. If the projection position adjustment processing should be ended, the controller 108 ends this processing.

As described above, in this embodiment, when the shift of the projected image cannot be performed by one of the lens shift and the digital shift selected as the shifting method to be used, the shifting method is automatically switched to the other. This enables the shift of the projected image in a wide range in response to a user's simple operation.

### Fourth Embodiment

FIG. 7B shows a configuration of an operating part 904 of a liquid crystal projector (image projection apparatus) that is a fourth embodiment (Embodiment 4) of the present invention. The operating part 904 includes, as with the operating part 901 described in Embodiment 3, a shift direction selecting part 903 which is operated by a user to select a shift direction of a projected image and a shifting method selecting part 905 which is operated by the user to select one of digital shift and lens shift as a shifting method to be used.

When the lens shift or the digital shift is selected through the shifting method selecting part 905, a controller 108 performs the processing described in Embodiment 3. When both the lens shift and the digital shift are selected through the shifting method selecting part 905, the controller 108 performs the processing described in Embodiment 1 or 2.

Providing such an operating part 904 makes it possible to select the shifting method of the projected image according to user's preference and demand.

As described above, each of the above-described embodiments can perform the shift of the projected image in a wide range using the optical shifting part (optical shifting function) and the image shifting part (digital shifting function) in response to a user's simple operation.

While the present invention has been described with reference to exemplary embodiments, it is to be understood that the invention is not limited to the disclosed exemplary embodiments. The scope of the following claims is to be accorded the broadest interpretation so as to encompass all such modifications, equivalent structures and functions.

For example, although the description was made of the case where the liquid crystal panel is used as the image-forming element in the above-described embodiments, other image-forming elements such as a digital micro mirror device may be used.
The image projection apparatus (101) includes an image-forming element (103) forming an original image, a projection optical system (104) projecting light from the image-forming element onto a projection surface (114) to form a projected image, an optical shifting part (105) shifting the projection optical system in a first shift range, an image shifting part (107) shifting an image-forming area on the image-forming element in a second shift range, and a controller (108). In a shift direction in which the projected image is shifted according to an operation of an operating part (109), the controller causes the optical shifting part to shift the projection optical system in a state where the image-forming area is located closer to a center of the second shift range than an end thereof, and then causes the image shifting part to shift the image-forming area in a state where the projection optical system has been shifted to an end of the first shift range.

## Claims

1. An image projection apparatus (101) comprising:
an image-forming element (103) configured to form an original image and being illuminated with light from a light source (102);
a projection optical system (104) configured to project the light from the image-forming element onto a projection surface (114) to form a projected image on the projection surface;
an optical shifting part (105) configured to shift the projection optical system with respect to the image-forming element in a first shift range;
an image shifting part (107) configured to shift an image-forming area where the original image is formed on the image-forming element in a second shift range;
an operating part (109) configured to be operated by a user to shift the projected image on the projection surface; and
a controller (108) configured to control the optical shifting part and the image shifting part in response to an operation of the operating part,
**characterized in that**, in a shift direction in which the projected image is shifted according to an instruction provided by the operation of the operating part (109), the controller (108) causes the optical shifting part (105) to shift the projection optical system (104) in the first shift range in a state where the image-forming area is located closer to a center of the second shift range than an end of the second shift range, and then causes the image shifting part (107) to shift the image-forming area in the second shift range in a state where the projection optical system has been shifted to an end of the first shift range.

2. An image projection apparatus (101) comprising:
an image-forming element (103) configured to form an original image and being illuminated with light from a light source (102);
a projection optical system (104) configured to project the light from the image-forming element onto a projection surface (114) to form a projected image on the projection surface;
an optical shifting part (105) configured to shift the projection optical system with respect to the image-forming element in a first shift range;
an image shifting part (107) configured to shift an image-forming area where the original image is formed on the image-forming element in a second shift range;
an operating part (109) configured to be operated by a user to shift the projected image on the projection surface; and
a controller (108) configured to control the optical shifting part and the image shifting part in response to an operation of the operating part,
**characterized in that**, in a shift direction in which the projected image is shifted according to an instruction provided by the operation of the operating part (109), the controller (108) causes the image shifting part (107) to shift the image-forming area in the second shift range in a state where the projection optical system (104) is located closer to a center of the first shift range than an end of the first shift range, and then causes the optical shifting part (105) to shift the projection optical system (104) in the first shift range in a state where the image-forming area has been shifted to an end of the second shift range.

3. An image projection apparatus (101) comprising:
an image-forming element (103) configured to form an original image and being illuminated with light from a light source (102);
a projection optical system (104) configured to project the light from the image-forming element onto a projection surface (114) to form a projected image on the projection surface;
an optical shifting part (105) configured to shift the projection optical system with respect to the image-forming element in a first shift range;
an image shifting part (107) configured to shift an image-forming area where the original image is formed on the image-forming element in a second shift range;
an operating part (902, 903, 905) configured to be operated by a user to select one of the optical shifting part and the image shifting part and to shift the projected image on the projection surface; and
a controller (108) configured to control the optical shifting part and the image shifting part in response to an operation of the operating part,
**characterized in that**, when the optical shifting part (105) is selected according to the operation of the operating part (902, 905), the controller (108) causes the optical shifting part to shift the projection optical system (104) to an end of the first shift range, and then causes the image shifting part (107) to shift the image-forming area in the second shift range, and
when the image shifting part (107) is selected according to the operation of the operating part (902, 905), the controller (108) causes the image shifting part to shift the image-forming area to an end of the second shift range, and then causes the optical shifting part (105) to shift the projection optical system (104) in the first shift range.

4. An image projection apparatus (101) according to claim 3,
wherein the operating part (905) is configured to be operated by a user to select both or one of the optical shifting part and the image shifting part, and wherein, when both of the optical shifting part (105) and image shifting part (107) are selected according to the operation of the operating part (905), in a shift direction in which the projected image is shifted according to an instruction provided by the operation of the operating part (903),
the controller (108) causes the optical shifting part (105) to shift the projection optical system (104) in the first shift range in a state where the image-forming area is located closer to a center of the second shift range than an end of the second shift range, and then causes the image shifting part (107) to shift the image-forming area in the second shift range in a state where the projection optical system (104) has been shifted to an end of the first shift range, or
causes the image shifting part (107) to shift the image-forming area in the second shift range in a state where the projection optical system (104) is located closer to a center of the first shift range than an end of the first shift range, and then causes the optical shifting part (105) to shift the projection optical system (104) in the first shift range in a state where the image-forming area has been shifted to the end of the second shift range.

## Patentansprüche

1. Bildprojektor (101) mit:
einem bilderzeugenden Element (103), das dazu eingerichtet ist, ein Originalbild zu erzeugen und das mit Licht aus einer Lichtquelle (102) beleuchtet wird;
einem optischen Projektionssystem (104), das dazu eingerichtet ist, das Licht von dem bilderzeugenden Element auf eine Projektionsoberfläche (114) zu projizieren, um ein projiziertes Bild auf der Projektionsoberfläche zu erzeugen;
einem optischen Verschiebungsteil (105), der dazu eingerichtet ist, das optische Projektionssystem bezüglich dem bilderzeugenden Element in einen ersten Verschiebungsbereich zu verschieben;
einem Bildverschiebungsteil (107), der dazu eingerichtet ist, einen bilderzeugenden Bereich, in dem das Originalbild auf dem bilderzeugenden Element erzeugt ist, in einen zweiten Verschiebungsbereich zu verschieben;
einem Bedienungsteil (109), der dazu eingerichtet ist, von einem Nutzer bedient zu werden, um das projizierte Bild auf der Projektionsoberfläche zu verschieben; und
einer Steuervorrichtung (108), die dazu eingerichtet ist, den optischen Verschiebungsteil und den Bildverschiebungsteil in Erwiderung auf eine Bedienung des Bedienungsteils zu steuern,
**dadurch gekennzeichnet, dass** die Steuervorrichtung (108) in einer Verschiebungsrichtung, in die das projizierte Bild gemäß einem durch die Bedienung des Bedienungsteils (109) bereitgestellten Befehl verschoben ist, den optischen Verschiebungsteil (105) dazu veranlasst, das optische Projektionssystem (104) in den ersten Verschiebungsbereich in einem Zustand, in dem der bilderzeugende Bereich näher an einem Zentrum des zweiten Verschiebungsbereichs angeordnet ist als an einem Ende des zweiten Verschiebungsbereichs, zu verschieben, und dann den Bildverschiebungsteil (107) dazu veranlasst, den bilderzeugenden Bereich in den zweiten Verschiebungsbereich in einem Zustand, in dem das optische Projektionssystem zu einem Ende des ersten Verschiebungsbereichs verschoben ist, zu verschieben.

2. Bildprojektor (101) mit:
einem bilderzeugenden Element (103), das dazu eingerichtet ist, ein Originalbild zu erzeugen und das mit Licht aus einer Lichtquelle (102) beleuchtet wird;
einem optischen Projektionssystem (104), das dazu eingerichtet ist, das Licht von dem bilderzeugenden Element auf eine Projektionsoberfläche (114) zu projizieren, um ein projiziertes Bild auf der Projektionsoberfläche zu erzeugen;
einem optischen Verschiebungsteil (105), der dazu eingerichtet ist, das optische Projektionssystem bezüglich dem bilderzeugenden Element in einen ersten Verschiebungsbereich zu verschieben;
einem Bildverschiebungsteil (107), der dazu eingerichtet ist, einen bilderzeugenden Bereich, in dem das Originalbild auf dem bilderzeugenden Element (103) erzeugt ist, in einen zweiten Verschiebungsbereich zu verschieben;
einem Bedienungsteil (109), der dazu eingerichtet ist, von einem Nutzer bedient zu werden, um das projizierte Bild auf der Projektionsoberfläche zu verschieben; und
einer Steuervorrichtung (108), die dazu eingerichtet ist, den optischen Verschiebungsteil und den Bildverschiebungsteil in Erwiderung auf eine Bedienung des Bedienungsteils zu steuern,
**dadurch gekennzeichnet, dass** die Steuervorrichtung (108) in einer Verschiebungsrichtung, in die das projizierte Bild gemäß einem durch die Bedienung des Bedienungsteils (109) bereitgestellten Befehl verschoben ist, den Bildverschiebungsteil (107) dazu veranlasst, den bilderzeugenden Bereich in den zweiten Verschiebungsbereich in einem Zustand, in dem das optische Projektionssystem (104) näher an einem Zentrum des ersten Verschiebungsbereichs angeordnet ist als an einem Ende des ersten Verschiebungsbereichs, zu verschieben, und dann den optischen Verschiebungsteil (105) dazu veranlasst, das optische Projektionssystem (104) in den ersten Verschiebungsbereich in einem Zustand, in dem der bilderzeugende Bereich zu einem Ende des zweiten Verschiebungsbereichs verschoben ist, zu verschieben.

3. Bildprojektor (101) mit:
einem bilderzeugenden Element (103), das dazu eingerichtet ist, ein Originalbild zu erzeugen und das mit Licht aus einer Lichtquelle (102) beleuchtet wird;
einem optischen Projektionssystem (104), das dazu eingerichtet ist, das Licht von dem bilderzeugenden Element auf eine Projektionsoberfläche (114) zu projizieren, um ein projiziertes Bild auf der Projektionsoberfläche zu erzeugen;
einem optischen Verschiebungsteil (105), der dazu eingerichtet ist, das optische Projektionssystem bezüglich dem bilderzeugenden Element in einen ersten Verschiebungsbereich zu verschieben;
einem Bildverschiebungsteil (107), der dazu eingerichtet ist, einen bilderzeugenden Bereich, in dem das Originalbild auf dem bilderzeugenden Element erzeugt ist, in einen zweiten Verschiebungsbereich zu verschieben;
einem Bedienungsteil (902, 903, 905), der dazu eingerichtet ist, von einem Nutzer bedient zu werden, um eines aus dem optischen Verschiebungsteil und dem Bildverschiebungsteil auszuwählen und um das projizierte Bild auf der Projektionsoberfläche zu verschieben; und
einer Steuervorrichtung (108), die dazu eingerichtet ist, den optischen Verschiebungsteil und den Bildverschiebungsteil in Erwiderung auf eine Bedienung des Bedienungsteils zu steuern,
**dadurch gekennzeichnet, dass** die Steuervorrichtung (108), wenn der optische Verschiebungsteil (105) gemäß der Bedienung des Bedienungsteils (902, 905) ausgewählt ist, das optische Verschiebungsteil dazu veranlasst, das optische Projektionssystem (104) zu einem Ende des ersten Verschiebungsbereichs zu verschieben, und dann den Bildverschiebungsteil (107) dazu veranlasst, den bilderzeugenden Bereich in den zweiten Verschiebungsbereich zu verschieben, und
dass die Steuervorrichtung (108), wenn der Bildverschiebungsteil (107) gemäß der Bedienung des Bedienungsteils (902, 905) ausgewählt ist, den Bildverschiebungsteil dazu veranlasst, den bilderzeugenden Bereich zu einem Ende des zweiten Verschiebungsbereichs zu verschieben und dann den optischen Verschiebungsteil (105) dazu veranlasst, das optische Projektionssystem (104) in den ersten Verschiebungsbereich zu verschieben.

4. Bildprojektor (101) nach Anspruch 3,
wobei der Bedienungsteil (905) dazu eingerichtet ist, von einem Nutzer bedient zu werden, um beide oder einen aus dem optischen Verschiebungsteil und dem Bildverschiebungsteil auszuwählen, und wobei, wenn sowohl der optische Verschiebungsteil (105) als auch der Bildverschiebungsteil (107) gemäß der Bedienung des Bedienungsteils (905) ausgewählt sind, die Steuervorrichtung (108) in einer Verschiebungsrichtung, in die das projizierte Bild gemäß einem durch die Bedienung des Bedienungsteils (903) bereitgestellten Befehl verschoben ist, den optischen Verschiebungsteil (105) dazu veranlasst, das optische Projektionssystem (104) in den ersten Verschiebungsbereich in einem Zustand, in dem der bilderzeugende Bereich näher an einem Zentrum des zweiten Verschiebungsbereichs angeordnet ist als an einem Ende des zweiten Verschiebungsbereichs, zu verschieben, und dann den Bildverschiebungsteil (107) dazu veranlasst, den bilderzeugenden Bereich in den zweiten Verschiebungsbereich in einem Zustand, in dem das optische Projektionssystem (104) zu einem Ende des ersten Verschiebungsbereichs verschoben ist, zu verschieben, oder
den Bildverschiebungsteil (107) dazu veranlasst, den bilderzeugenden Bereich in den zweiten Verschiebungsbereich in einem Zustand, in dem das optische Projektionssystem (104) näher an einem Zentrum des ersten Verschiebungsbereichs angeordnet ist als an einem Ende des ersten Verschiebungsbereichs, zu verschieben, und dann den optischen Verschiebungsteil (105) dazu veranlasst, das optische Projektionssystem (104) in den ersten Verschiebungsbereich in einem Zustand, in dem der bilderzeugende Bereich zu einem Ende des zweiten Verschiebungsbereichs verschoben ist, zu verschieben.

## Revendications

1. Appareil de projection d'image (101) comprenant :
un élément de formation d'image (103) configuré pour former une image originale et éclairé par de la lumière provenant d'une source de lumière (102) ;
un système optique de projection (104) configuré pour projeter la lumière provenant de l'élément de formation d'image sur une surface de projection (114) afin de former une image projetée sur la surface de projection ;
une partie de décalage optique (105) configurée pour décaler le système optique de projection par rapport à l'élément de formation d'image dans une première plage de décalage ;
une partie de décalage d'image (107) configurée pour décaler une zone de formation d'image dans laquelle l'image originale est formée sur l'élément de formation d'image dans une seconde plage de décalage ;
une partie d'actionnement (109) configurée pour être actionnée par un utilisateur afin de décaler l'image projetée sur la surface de projection ; et
une unité de commande (108) configurée pour commander la partie de décalage optique et la partie de décalage d'image en réponse à un actionnement de la partie d'actionnement,
**caractérisé en ce que**, dans une direction de décalage dans laquelle l'image projetée est décalée conformément à une instruction fournie par l'actionnement de la partie d'actionnement (109), l'unité de commande (108) fait en sorte que la partie de décalage optique (105) décale le système optique de projection (104) dans la première plage de décalage dans un état dans lequel la zone de formation d'image est située plus près d'un centre de la seconde plage de décalage que d'une extrémité de la seconde plage de décalage, puis fait en sorte que la partie de décalage d'image (107) décale la zone de formation d'image dans la seconde plage de décalage dans un état dans lequel le système optique de projection a été décalé vers une extrémité de la première plage de décalage.

2. Appareil de projection d'image (101) comprenant :
un élément de formation d'image (103) configuré pour former une image originale et éclairé par de la lumière provenant d'une source de lumière (102) ;
un système optique de projection (104) configuré pour projeter la lumière provenant de l'élément de formation d'image sur une surface de projection (114) afin de former une image projetée sur la surface de projection ;
une partie de décalage optique (105) configurée pour décaler le système optique de projection par rapport à l'élément de formation d'image dans une première plage de décalage ;
une partie de décalage d'image (107) configurée pour décaler une zone de formation d'image dans laquelle l'image originale est formée sur l'élément de formation d'image dans une seconde plage de décalage ;
une partie d'actionnement (109) configurée pour être actionnée par un utilisateur afin de décaler l'image projetée sur la surface de projection ; et
une unité de commande (108) configurée pour commander la partie de décalage optique et la partie de décalage d'image en réponse à un actionnement de la partie d'actionnement,
**caractérisé en ce que**, dans une direction de décalage dans laquelle l'image projetée est décalée conformément à une instruction fournie par l'actionnement de la partie d'actionnement (109), l'unité de commande (108) fait en sorte que la partie de décalage d'image (107) décale la zone de formation d'image dans la seconde plage de décalage dans un état dans lequel le système optique de projection (104) est situé plus près d'un centre de la première plage de décalage que d'une extrémité de la première plage de décalage, puis fait en sorte que la partie de décalage optique (105) décale le système otique de projection (104) dans la première plage de décalage dans un état dans lequel la zone de formation d'image a été décalée vers une extrémité de la seconde plage de décalage.

3. Appareil de projection d'image (101) comprenant :
un élément de formation d'image (103) configuré pour former une image originale et éclairé par de la lumière provenant d'une source de lumière (102) ;
un système optique de projection (104) configuré pour projeter la lumière provenant de l'élément de formation d'image sur une surface de projection (114) afin de former une image projetée sur la surface de projection ;
une partie de décalage optique (105) configurée pour décaler le système optique de projection par rapport à l'élément de formation d'image dans une première plage de décalage ;
une partie de décalage d'image (107) configurée pour décaler une zone de formation d'image dans laquelle l'image originale est formée sur l'élément de formation d'image dans une seconde plage de décalage ;
une partie d'actionnement (902, 903, 905) configurée pour être actionnée par un utilisateur pour sélectionner l'une de la partie de décalage optique et de la partie de décalage d'image et pour décaler l'image projetée sur la surface de projection ; et
une unité de commande (108) configurée pour commander la partie de décalage optique et la partie de décalage d'image en réponse à un actionnement de la partie d'actionnement,
**caractérisé en ce que**, lorsque la partie de décalage optique (105) est sélectionnée conformément à l'actionnement de la partie d'actionnement (902, 905), l'unité de commande (108) fait en sorte que la partie de décalage optique décale le système optique de projection (104) vers une extrémité de la première plage de décalage, puis fait en sorte que la partie de décalage d'image (107) décale la zone de formation d'image dans la seconde plage de décalage, et
lorsque la partie de décalage d'image (107) est sélectionnée conformément à l'actionnement de la partie d'actionnement (902, 905), l'unité de commande (108) fait en sorte que la partie de décalage d'image décale la zone de formation d'image vers une extrémité de la seconde plage de décalage, puis fait en sorte que la partie de décalage optique (105) décale le système optique de projection (104) dans la première plage de décalage.

4. Appareil de projection d'image (101) selon la revendication 3,
dans lequel la partie d'actionnement (905) est configurée pour être actionnée par un utilisateur afin de sélectionner l'une de la partie de décalage optique et de la partie de décalage d'image ou les deux, et dans lequel, lorsque la partie de décalage optique (105) et la partie de décalage d'image (107) sont toutes deux sélectionnées conformément à l'actionnement de la partie d'actionnement (905), dans une direction de décalage dans laquelle l'image projetée est décalée conformément à une instruction fournie par l'actionnement de la partie d'actionnement (903),
l'unité de commande (108) fait en sorte que la partie de décalage optique (105) décale le système optique de projection (104) dans la première plage de décalage dans un état dans lequel la zone de formation d'image est située plus près d'un centre de la seconde plage de décalage que d'une extrémité de la seconde plage de décalage, puis fait en sorte que la partie de décalage d'image (107) décale la zone de formation d'image dans la seconde plage de décalage dans un état dans lequel le système optique de projection (104) a été décalé vers une extrémité de la première plage de décalage, ou
fait en sorte que la partie de décalage d'image (107) décale la zone de formation d'image dans la seconde plage de décalage dans un état dans lequel le système optique de projection (104) est situé plus près d'un centre de la première plage de décalage que d'une extrémité de la première plage de décalage, puis fait en sorte que la partie de décalage optique (105) décale le système optique de projection (104) dans la première plage de décalage dans un état dans lequel la zone de formation d'image a été décalée vers l'extrémité de la seconde plage de décalage.
